# FASCICULE DE BREVET EUROPEEN

(11) **EP 1 418 702 B1**
(45) Date de publication et mention de la délivrance du brevet: **25.07.2007**
(21) Numéro de dépôt: 03292729.5
(22) Date de dépôt: 31.10.2003
(51) Int. Cl.: H04L 9/08, H04L 9/32

(54) **Procédé d'échange securisé entre deux unités de communication, système de contrôle et serveur pour la mise en oeuvre du procédé**
Sicheres Austauschverfahren zwischen zwei Kommunikationsvorrichtungen, Kontrollsystem und Server für die implementierung des Verfahrens
Secure exchange method between two communications units, control system and server for the set-up of the method

(30) Priorité: 06.11.2002 FR 0213869
(43) Date de publication de la demande: 12.05.2004
(73) Titulaire: FRANCE TELECOM, 75015 Paris (FR)
(72) Inventeur: Frisch, Laurent, 75013 Paris (FR); Macario-Rat, Gilles, 92170 Vanves (FR); Mouton, Dimitri, 75015 Paris (FR)
(74) Mandataire: Loisel, Bertrand

(56) Documents cités:
- RUBIN A D: "Extending NCP for protocols using public keys" COMPUTER COMMUNICATIONS AND NETWORKS, 1995. PROCEEDINGS., FOURTH INTERNATIONAL CONFERENCE ON LAS VEGAS, NV, USA 20-23 SEPT. 1995, LOS ALAMITOS, CA, USA,IEEE COMPUT. SOC, US, 20 septembre 1995 (1995-09-20), pages 94-104, XP010200311 ISBN: 0-8186-7180-7
- A. MENEZES,P. VAN OORSCHOT AND S. VANSTONE: "Handbook of Applied Cryptography" 1996 , CRC PRESS XP002246921 ISBN: 0-8493-8523-7 * page 548 - page 550 * * page 559 - page 561 *

## Description

La présente invention concerne les techniques d'échange sécurisé entre unités de communication.

De plus en plus de services en ligne à valeur ajoutée se développent autour des notions de base de la sécurité applicative, en particulier la signature électronique et le chiffrement de données. Pour réaliser ces opérations de cryptographie à clé publique, un préalable fréquent est la détention d'une bi-clé, c'est-à-dire d'un couple clé privée - clé publique, et d'un certificat délivré par une Autorité de Certification (AC).

Certains de ces services impliquent deux utilisateurs indépendants l'un de l'autre, qui ne sont pas nécessairement abonnés au même service. L'un de ces utilisateurs peut ne pas disposer des éléments de cryptographie appropriés. Par exemple, dans le cas d'un service de courrier électronique hautement sécurisé (chiffré, et avec accusé de réception signé), l'expéditeur d'un message peut ne pas connaître a priori les éléments de sécurité de son destinataire, et le destinataire peut ne pas disposer du nécessaire. Cela empêche un tel service à valeur ajoutée de se répandre puisqu'un utilisateur qui n'a pas fait de lui-même les démarches d'enregistrement auprès d'une AC ne sera jamais inclus dans un tel service, même passivement, contrairement à ce qui se passe dans la vie quotidienne où, par exemple, tout le monde peut recevoir un courrier recommandé avec accusé de réception.

L'objet fondamental permettant d'avoir confiance en la partie publique d'une clé cryptographique (clé publique) est le certificat. Le standard de certificat utilisé dans de nombreux réseaux dont l'Intemet est X.509, version 3. Une spécification en est fournie par le groupe de travail PKIX de l'IETF ("Internet Engineering Task Force") dans la Request For Comments (RFC) 3280, "Internet X.509 Public Key Infrastructure; Certificate and Certificate Revocation List (CRL) Profile" publiée en avril 2002. Le certificat est un objet comprenant notamment:
- la clé publique à certifier;
- l'identité de son possesseur;
- une période de validité;
- une signature cryptographique de ces données par la clé privée d'une Autorité de Certification (AC) émettrice du certificat.

Avoir confiance en la clé publique associée à une identité revient à s'assurer de la validité du certificat. Pour PKIX, un certificat est valide à un instant T donné (en termes de confiance):
- soit s'il est explicitement déclaré comme "certificat de confiance". En pratique, les certificats des utilisateurs ne sont jamais déclarés de confiance. On déclare plutôt un nombre réduit de certificats de confiance, consistant en les certificats de certaines AC;
- soit s'il vérifie les conditions suivantes:
   - la signature cryptographique du certificat est mathématiquement valide;
   - l'instant T fait partie de la période de validité du certificat;
   - le certificat n'est pas révoqué à l'instant T;
   - la clé publique de l'AC émettrice est disponible par un certificat de l'AC, et ce certificat de l'AC est lui-même valide à l'instant T.

Les certificats cryptographiques ont une durée de vie déterminée dans la Politique de Certification de l'Autorité de Certification qui les émet. Cette durée est typiquement d'un à trois ans pour des certificats d'utilisateurs.

Cette durée étant longue, il est nécessaire de prévoir la possibilité de compromission de la clé certifiée au cours de la période de validité du certificat. Un mécanisme de révocation et de contrôle de révocation est donc mis en place pour permettre d'invalider un certificat qui ne doit plus être utilisé.

D'autre part, le fait qu'une signature électronique ait été effectuée avec un certificat de durée de vie relativement longue ne donne que peu d'indications sur la date à laquelle la signature a été effectuée. Il faut donc coupler le mécanisme de signature électronique à un mécanisme d'horodatage.

La phase d'enregistrement est celle au cours de laquelle l'utilisateur fournit à l'Autorité de Certification des détails et des justificatifs sur son identité, que l'AC vérifie, ainsi que la preuve de possession de la clé qu'il s'agit de certifier.

Cette phase doit être réalisée en conformité avec la Politique de Certification de l'AC. Elle est fondamentale car c'est sur la foi de cet enregistrement que les tiers pourront avoir confiance en la concordance de l'identité du titulaire du certificat avec le porteur de la clé correspondante.

Plusieurs classes de certification sont définies, en fonction de la rigueur avec laquelle les vérifications sont effectuées lors de la phase d'enregistrement.

Par exemple, les certificats gratuits que l'on peut obtenir sur Internet ne certifient qu'une adresse de messagerie électronique: aucune vérification n'est réalisée; cela correspond à la classe 1.

A l'inverse, un certificat de classe 3 n'est attribué qu'après une vérification très rigoureuse de l'identité du titulaire, avec fourniture de papiers d'identité officiels, appel téléphonique sur le lieu de travail, etc.

La fonction de signature électronique permet de garantir l'authenticité d'un document, c'est-à-dire d'authentifier de façon sûre son ou ses signataires et de garantir que le document n'a pas été modifié (intégrité). La signature électronique est souvent utilisée pour garantir la non-répudiation. La non-répudiation d'un document consiste à se prémunir contre un déni ultérieur de son auteur.

Les formats les plus couramment utilisés pour des messages signés sont:
- PKCS#7, publié par la société RSA Security, Inc. et par l'IETF en mars 1998 (RFC 2315, "PKCS #7: Cryptographic Message Syntax; Version 1.5"), qui a été repris dans CMS ("Cryptographic Message Syntax", RFC 2630, IETF, juin 1999). Ces standards sont utilisés notamment dans la spécification S/MIME ("Secure Multipurpose Internet Mail Extensions") pour les courriers électroniques signés. Ils reposent sur des certificats issus de PKIX (X.509, CRL, OCSP) et sont "extensibles" dans le sens où il est possible de rajouter des extensions (compléments d'information) signées (authenticatedAttributes) ou non (unauthenticatedAttributes);
- XML-DSig, faisant partie de la famille des formats de données XML ("eXtended Markup Language"). Ce format permet d'utiliser les certificats issus de PKIX, et est également extensible;
- PGP correspondant aux messages signés issus du logiciel PGP ("Pretty Good Privacy" commercialisé par la société Networks Associates Technology, Inc.) et de ses analogues. Ses certificats sont différents de ceux issus de PKIX.

Un inconvénient de la technique de signature est qu'il est nécessaire de disposer d'un certificat pour l'appliquer.

Dans le cas de certains services, cela peut constituer une entrave. Par exemple, pour l'envoi de courrier électronique avec accusé de réception à signer, on ne peut pas exiger d'accusé de réception de la part d'un utilisateur qui n'est pas préalablement certifié.

Le chiffrement de données permet de garantir la confidentialité des informations stockées ou transmises à un tiers. Les formats les plus couramment utilisés pour des messages chiffrés sont PKCS#7/CMS et PGP.

Le principe le plus courant du chiffrement d'un message M est le suivant:
- l'émetteur tire une clé de session symétrique K qui ne sera utilisée que pour le chiffrement de M (une nouvelle clé K sera générée pour chaque message chiffré);
- l'émetteur chiffre M avec K (K[M]) grâce à un algorithme de chiffrement symétrique (par exemple DES, 3DES, RC2, RC4, AES...);
- l'émetteur chiffre K avec la clé publique Kpub du destinataire (Kpub[K]), en chiffrement asymétrique; et
- l'émetteur envoie au destinataire K[M] et Kpub[K].

Le déchiffrement se déroule alors ainsi:
- le destinataire reçoit K[M] et Kpub[K];
- grâce à la clé privée Kpriv correspondant à la clé publique Kpub, le destinataire déchiffre K: Kpriv[Kpub[K]] = K; et
- grâce à clé de session symétrique K, le destinataire déchiffre le message M: K[K[M]] = M.

L'inconvénient de cette technique de chiffrement/déchiffrement est qu'elle nécessite de connaître a priori la clé publique du destinataire, et donc qu'il faut que le destinataire ait un certificat. Par exemple, on ne peut pas envoyer de courrier électronique chiffré à un destinataire non préalablement certifié. Cela restreint l'utilisation de certains services à valeur ajoutée.

Le document intitulé Extending NCP for Protocols Using Public Keys, Aviel D. Rubin, Bellecore, 445 South St., Morristown, NJ 07960, illustre en particulier l'inconvénient précité, le destinataire devant disposer non seulement d'une clé privée, mais également d'un certificat de clé publique, associé à cette clé privée. Cette contrainte ne permet en outre pas de faire échec au détournement par un tiers d'une clé secrète ou clé de session utilisée par un premier terminal et un second terminal dans le cadre d'une ou plusieurs transactions avec un second terminal.

Un but de la présente invention est de pallier ces limitations de la technique antérieure.

L'invention propose ainsi un procédé d'échange sécurisé entre une première unité de communication et une seconde unité de communication par l'intermédiaire d'un système de contrôle. Une clé privée et un certificat incorporant une clé publique associée à la clé privée sont générés pour la seconde unité en réponse à la réception par le système de contrôle, depuis la première unité, d'une requête de communication avec la seconde unité. Ensuite, la seconde unité exécute au moins une opération cryptographique avec la clé privée en relation avec un message issu de la première unité.

Dans le cadre d'un service à valeur ajoutée tel qu'évoqué précédemment, le procédé permet à un émetteur de demander, pour son destinataire, l'émission d'une bi-clé et d'un certificat temporaires lui permettant de jouer son rôle de récepteur, même en l'absence de son enregistrement au service.

Un avantage est que les utilisateurs actifs peuvent ne plus échanger uniquement en univers clos, mais avec tout le monde, grâce à l'inclusion dans les destinataires potentiels des utilisateurs "passifs" non inscrits, ce qui rend les services plus attrayants.

D'autre part, ces utilisateurs "passifs" sont sensibilisés au service qu'ils auront ainsi expérimenté, et pourront donc venir augmenter les rangs des utilisateurs "actifs", c'est-à-dire des clients des fournisseurs offrant ces services.

Un mode de réalisation du procédé comprend les étapes suivantes:
- la première unité transmet au système de contrôle la requête de communication avec la seconde unité, accompagnée d'au moins un identifiant de la seconde unité;
- le système de contrôle génère pour la seconde unité au moins une clé privée et un certificat incorporant une clé publique associée à la clé privée;
- le système de contrôle transmet une version chiffrée de la clé privée à la seconde unité, par un premier chemin de communication;
- le système de contrôle transmet une clé de déchiffrement à la seconde unité, par un second chemin de communication; et
- la seconde unité récupère la clé privée à partir de sa version chiffrée à l'aide de la clé de déchiffrement, et exécute au moins une opération cryptographique avec la clé privée.

Dans une autre réalisation, le procédé comprend les étapes suivantes:
- la première unité transmet au système de contrôle la requête de communication avec la seconde unité, accompagnée d'au moins un identifiant de la seconde unité;
- le système de contrôle obtient une clé d'authentification pour la seconde unité et notifie la requête de communication à la seconde unité par un premier chemin de communication;
- la seconde unité s'authentifie auprès du système de contrôle, en établissant un canal de communication authentifié sur un second chemin de communication entre la seconde unité et le système de contrôle;
- la seconde unité génère un couple clé privée - clé publique;
- la seconde unité transmet au système de contrôle, sur le canal authentifié, une requête de certificat générée au moyen d'au moins la clé publique;
- le système de contrôle génère et transmet à la seconde unité, sur le canal authentifié, le certificat incorporant la clé publique; et
- la seconde unité exécute au moins une opération cryptographique avec la clé privée.

Un autre aspect de la présente invention se rapporte à un système de contrôle d'échanges sécurisés entre une première unité de communication et une seconde unité de communication, comprenant des moyens pour générer, en réponse à la réception, depuis la première unité, d'une requête de communication avec la seconde unité, au moins un certificat incorporant une clé publique associée à une clé privée propre à la seconde unité, et des moyens pour commander l'exécution par la seconde unité d'au moins une opération cryptographique avec la clé privée en relation avec un message issu de la première unité.

Un autre aspect de la présente invention se rapporte à un serveur de contrôle d'échanges sécurisés entre une première unité de communication et une seconde unité de communication, comprenant des moyens pour s'adresser à un serveur de certification en réponse à la réception, depuis la première unité, d'une requête de communication avec la seconde unité, afin d'obtenir du serveur de certification au moins un certificat incorporant une clé publique associée à une clé privée propre à la seconde unité, et des moyens pour commander l'exécution par la seconde unité d'au moins une opération cryptographique avec la clé privée en relation avec un message issu de la première unité.

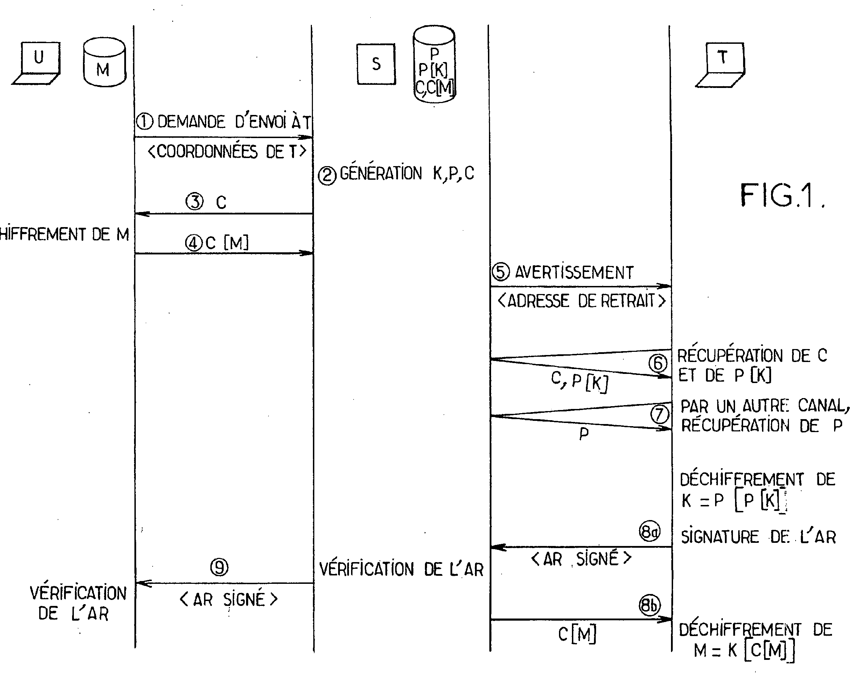

D'autres particularités et avantages de la présente invention apparaîtront dans la description ci-après d'exemples de réalisation non limitatifs, en référence aux dessins annexés, dans lesquels les figures 1 à 4 sont des diagrammes illustrant quatre exemples de mise en oeuvre de l'invention.

Le procédé selon l'invention trouve application lorsqu'un utilisateur souhaite utiliser un service nécessitant la mise en oeuvre de cryptographie en incluant un tiers, alors que ce tiers ne dispose pas d'un certificat numérique utilisable dans le cadre dudit service.

Aux fins de la présente description, on désigne par:
- "S" le service ou, selon le contexte, le système de contrôle d'échanges sécurisés assurant la fourniture de ce service,
- "U" l'utilisateur du service, ou une unité de communication dont se sert cet utilisateur,
- "T" le tiers, ou une unité de communication dont se sert ce tiers,
- "K" une clé privée affectée au tiers T,
- "C" le certificat du tiers T, incorporant la clé publique associée à la clé privée K,
- "M" un message que U destine à T, et
- "P" un mot de passe.

La figure 1 illustre un premier mode de réalisation du procédé selon l'invention, où l'utilisateur U a un message M à faire parvenir au tiers T au travers d'un service sécurisé nécessitant du chiffrement de données et la signature par le destinataire d'un accusé de réception. Deux types d'opérations cryptographiques sont donc requis:
- le chiffrement de données destinées à T, et
- la signature électronique d'un accusé de réception par T.

Dans l'exemple représenté, le système de contrôle d'échanges sécurisés rendant ce service se limite à un serveur S. Le procédé se déroule alors comme suit:
- Etape 1:: L'utilisateur U adresse au serveur S une demande d'émettre un message vers le tiers T, en fournissant un identifiant de T (coordonnées) qui puisse être certifié. Les informations fournies sur T peuvent être de nature diverse selon le service et le destinataire. Le plus courant est une adresse de messagerie électronique (e-mail). Cela peut aussi être un numéro de téléphone mobile ou encore une adresse IP d'un serveur déterminé.
- Etape 2:: Le serveur S procède à la génération sécurisée de la clé privée K et du certificat C correspondant. La clé K est chiffrée, par exemple par combinaison avec un mot de passe P: P[K]. Selon le type du tiers T, cela peut être tout autre procédé de chiffrement.
- Etape 3:: Le serveur S expédie le certificat C à l'utilisateur U.
- Etape 4:: L'utilisateur U chiffre M avec la clé publique contenue dans le certificat C, et envoie le message chiffré C[M] au serveur S.
- Etape 5:: S notifie au tiers T qu'il a reçu un message sécurisé, par exemple par e-mail ou par un service de messages courts (SMS, "Short Message Service) d'un réseau radio mobile, et l'invite à se connecter pour le récupérer.
- Etape 6:: T se connecte à S pour récupérer, dans un premier temps, la clé chiffrée P[K] et le certificat C.
- Etape 7:: Par un autre chemin de communication, T récupère le mot de passe P. Cet autre chemin peut par exemple passer par un autre serveur disponible uniquement pendant un laps de temps très court à partir du retrait de P[K], ou par un serveur vocal accessible seulement depuis son propre téléphone, ou correspondre à l'envoi d'un SMS sur un terminal radio mobile, etc. Le tiers T est alors en mesure de connaître sa clé privée K en la déchiffrant à l'aide du mot de passe P, soit K = P[P[K]].
- Etape 8:: T se connecte à la page de mise à disposition du message chiffré C[M]. Dans le service considéré, la récupération du message a lieu en deux phases:
a. Signature de l'accusé de réception et envoi de l'accusé de réception signé au serveur S pour lui indiquer qu'il a bien retiré le message. S vérifie cette signature.
b. Retrait du message chiffré C[M] et déchiffrement grâce à K, soit K[C[M] = M.
- Etape 9:: L'accusé de réception signé est envoyé par le serveur S à l'utilisateur U qui en vérifie la signature.

Par ce procédé, le tiers T a eu la possibilité de participer au déroulement du service S, sans y être inscrit et sans disposer a priori d'un certificat cryptographique.

Le certificat qui a été délivré à T dans ce cadre est de préférence de classe basse, puisque aucune vérification autre que son adresse d'e-mail n'a été effectuée. De plus, il est recommandé, dans ce genre de cas, d'avoir une période de validité du certificat très courte, afin d'éviter qu'il soit utilisé dans un cadre autre que celui-ci.

En cryptographie, on utilise fréquemment des clés différentes lorsque leurs usages sont différents. Par exemple, on distingue une clé de signature d'une clé de chiffrement. Cette distinction se fait par le «Key Usage » défini dans le certificat. Il est possible, dans le procédé précédemment décrit, de générer deux clés K pour le tiers T, notamment s'il doit réaliser un déchiffrement et une signature. Ces clés sont déchiffrées séparément à l'issue de l'étape 7.

Dans la description faite en référence à la figure 1, le tiers T réalise deux opérations cryptographiques, à savoir un déchiffrement et une signature électronique. On peut envisager de lui faire effectuer d'autres opérations cryptographiques mettant en jeu de la cryptographie à clé publique, comme par exemple de l'authentification, ou de l'horodatage de données.

Le tiers peut aussi ne réaliser qu'une seule opération, la signature par exemple.

Le procédé peut être utilisé pour tout service mettant en relation deux individus ayant besoin d'une ou plusieurs opérations cryptographiques. Le rôle du serveur S peut être enrichi, modifié, scindé entre plusieurs serveurs (par exemple un pour le service proprement dit, un autre pour l'émission de certificats).

Dans la description faite en référence à la figure 1, l'enregistrement du tiers T est fait sur la foi des informations fournies par l'utilisateur U. Il est également possible de demander à T la confirmation de ces informations, de les lui faire enrichir, ou de réaliser une véritable opération d'enregistrement au sens de la PKI, afin de lui délivrer un certificat ayant une réelle validité, c'est-à-dire un certificat de classe plus élevée.

Il est aussi possible aussi de recueillir du tiers T des informations que le serveur S transmettra à l'utilisateur U afin de vérifier qu'il n'y a pas eu d'erreur de saisie et que le destinataire est le bon.

Le prestataire de service peut avantageusement profiter du déroulement du procédé pour proposer au tiers T de s'enregistrer et de s'abonner au service, éventuellement dans des conditions privilégiées. On peut en cela considérer que l'utilisateur U a parrainé le futur abonné.

Toujours sous l'angle du marketing, le service incluant un tiers non abonné peut donner lieu à une tarification particulière vis-à-vis de l'utilisateur U, par rapport au service de base entre deux abonnés.

Le certificat émis pour le tiers T peut incorporer des contraintes importantes afin qu'il ne soit pas capable de l'utiliser dans d'autres applications. Il peut présenter des extensions particulières, et particulièrement des dates de validité très restrictives. En outre, cela évite d'avoir à gérer de la révocation sur ces certificats par définition temporaires.

Le procédé décrit en référence à la figure 1 utilise deux chemins de communication pour envoyer au tiers T d'une part la clé privée chiffrée P[K], et d'autre part le moyen P de la déchiffrer. Ces deux chemins peuvent être de toutes natures: e-mail, téléphone mobile par canal vocal ou SMS, téléphone fixe, pager, courrier, télégramme, etc.

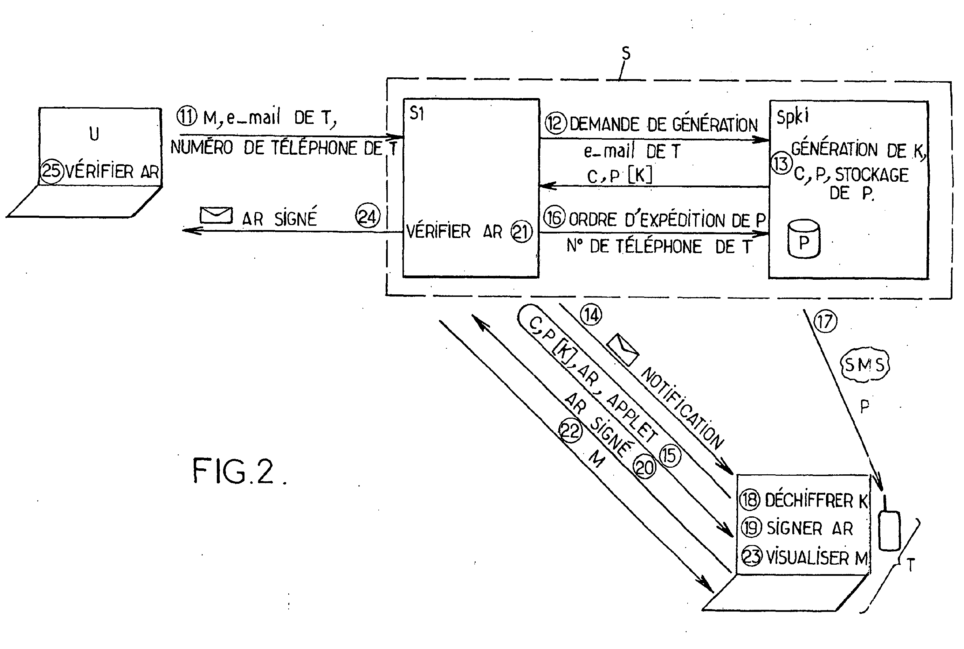

Le mode particulier de réalisation du procédé illustré par la figure 2 correspond à un service de courrier électronique recommandé avec accusé de réception signé. L'utilisateur U est un abonné à ce service voulant envoyer un pli avec accusé de réception signé à un tiers T non abonné, dont il connaît le numéro de téléphone mobile et l'adresse électronique.

Dans cet exemple, la fonction de système S de contrôle d'échanges sécurisés n'est pas assurée par un serveur unique, comme dans le cas de la figure 1, mais conjointement par le serveur S1 gérant le service et par un serveur de certification Spki pour l'émission de certificats temporaires, de classe basse, pour ce type de besoin particulier. On notera que les fonctions des serveurs S1 et Spki peuvent sans problème être regroupées dans la même machine.

La signature est réalisée au moyen d'une application écrite en langage à code mobile présente dans une page web sur le serveur S. Le langage à code mobile permet à cette application d'être indépendante de la plate-forme sur laquelle elle s'exécute. C'est par exemple le langage Java (voir "The Java Language Specification" publié par la société Sun Microsystems, Inc.). L'application est alors appelée "applet".

Le procédé peut alors se dérouler comme suit:
- Etape 11:: U se connecte au serveur S1 grâce à un navigateur web, et choisit d'envoyer un message en clair (non chiffré) avec accusé de réception signé, à un tiers T, dont il connaît l'adresse e-mail et le numéro de téléphone mobile. Les éléments transmis au serveur sont le message M, l'adresse e-mail de T et le numéro de téléphone mobile de T.
- Etape 12:: S1 s'adresse à Spki pour lui demander la génération d'un certificat de signature temporaire pour T, de durée 7 jours (période retenue par le service pour la garde des plis recommandés avec accusé de réception). Les éléments transmis à Spki incluent l'adresse e-mail de T.
- Etape 13:: Spki génère la bi-clé avec la clé privée K et le certificat associé C, ainsi que le mot de passe P. Spki chiffre K avec P, stocke P, et transmet C et P[K] à S1. De la sorte, S1 ne dispose pas de la clé privée de T et ne peut pas signer à sa place l'accusé de réception.
- Etape 14:: S1 transmet à T, par exemple par e-mail, un avis de mise à disposition d'un message, ainsi que l'adresse de retrait.
- Etape 15:: T se connecte à cette adresse de retrait du serveur S1 grâce à un navigateur, et récupère C, P[K], l'accusé de réception à signer, ainsi que l'applet de signature. Il est informé dans la page qui s'affiche qu'un mot de passe lui permettant de signer va immédiatement lui être envoyé par SMS.
- Etape 16:: S1 donne à Spki l'ordre d'envoyer au tiers T le mot de passe P. Les éléments transmis à Spki incluent le numéro de téléphone de T.
- Etape 17:: Spki envoie à T un SMS contenant P.
- Etape 18:: l'applet exécutée dans l'unité T récupère K grâce à P en déchiffrant P[K] reçu à l'étape 15.
- Etape 19:: T signe l'accusé de réception grâce à K, dans l'applet.
- Etape 20:: T envoie l'accusé de réception signé à S1.
- Etape 21:: S1 vérifie la signature de l'accusé de réception.
- Etape 22:: S1 envoie le message M au tiers T, par e-mail ou par un affichage web.
- Etape 23:: T visualise M.
- Etape 24:: Le serveur S1 envoie à l'utilisateur U, par exemple par e-mail, l'accusé de réception signé par T.
- Etape 25:: U vérifie la signature de l'accusé de réception, et a ainsi l'assurance que T a bien reçu son message.

Naturellement, le procédé de signature d'accusés de réception illustré par la figure 2 peut être couplé avec du chiffrement, de l'authentification par clé publique, ou d'autres fonctions cryptographiques à valeur ajoutée telles que de l'horodatage, l'inclusion d'une preuve persistante de validité du certificat, etc.

Dans une variante de réalisation, au lieu de demander à l'utilisateur U de spécifier deux chemins distincts vers le tiers T, le système de contrôle S, notamment le serveur S1, demande à T lui-même de choisir le mode de transmission de P. Ceci offre certes moins de sécurité car si T n'est pas le destinataire prévu (par exemple en cas d'usurpation d'adresse e-mail), il peut recevoir tous les éléments et donc le message. Dans le cas décrit en référence à la figure 2, il faudrait pour cela que l'usurpateur se procure également le téléphone mobile de T. Mais cela ajoute de la souplesse au procédé.

Il est possible d'implémenter dans l'applet Java une fonction de destruction de la clé privée K après usage. Pour être certain que cette clé K ne puisse pas être reconstituée, il est avantageux que ce soit l'applet et elle seule qui aille chercher P[K] sur le serveur S1, et qui la déchiffre à l'aide de P, puis qui détruise K et P[K] sur le poste client et sur le serveur.

Le système de contrôle S peut en outre inclure un serveur de transmission S3 distinct de Spki, chargé d'envoyer au tiers T le mot passe P. Cette architecture permet que Spki ne connaisse pas le numéro de téléphone de T, ce qui présente un intérêt particulier quand le serveur de certification Spki est exploité par une autorité distincte du prestataire de service, le numéro de téléphone pouvant alors être considéré comme une ressource critique.

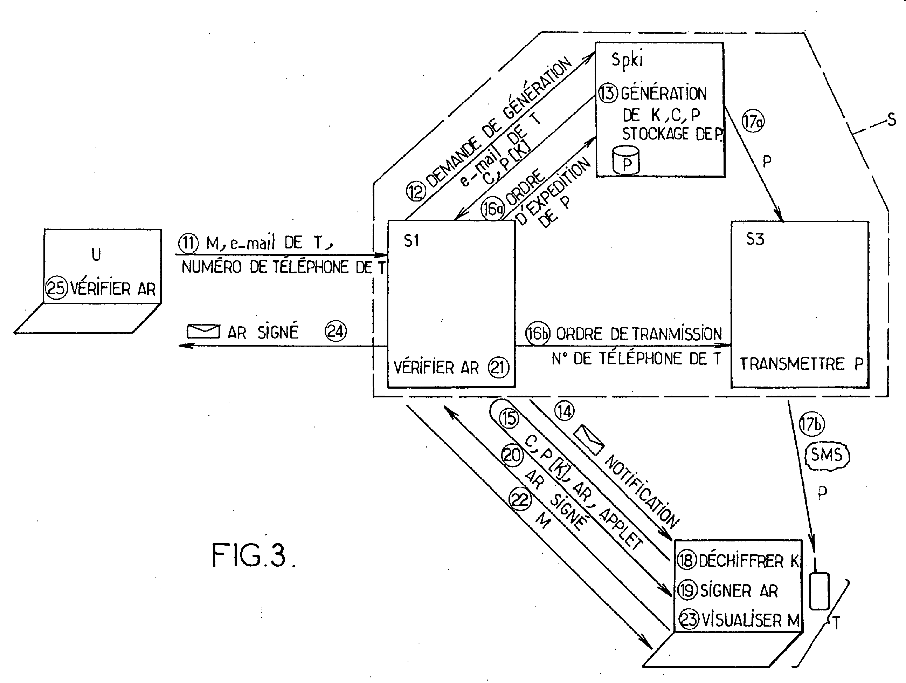

Une telle réalisation est illustrée par la figure 3. Le fonctionnement en est essentiellement le même que celui de la figure 2, avec les différences suivantes:
- L'étape 16 est subdivisée en deux sous-étapes: l'une (16a) où le serveur S1 ordonne à Spki de transmettre le mot de passe P au serveur de transmission S3, avec une certaine référence, et l'autre (16b) où S1 ordonne à S3 de relayer P au tiers T par SMS, en fournissant à S3 la même référence ainsi que le numéro de téléphone à employer.
- L'étape 17 est subdivisée en deux phases: l'une (17a) où Spki fournit P et la référence à S3, puis l'autre (17b) où S3 relaye P à T par SMS.

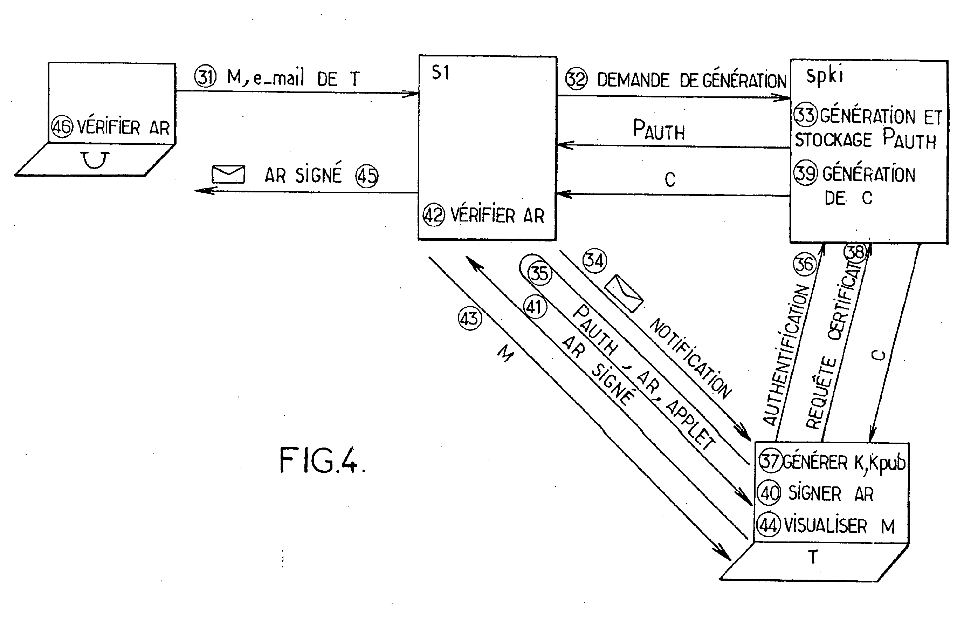

La figure 4 illustre un autre mode de réalisation de l'invention dans lequel, en vue de l'obtention du certificat, le système de contrôle S ne transmet au tiers T qu'un moyen d'authentification, en plus de l'applet contrôlant les opérations exécutées par le poste du tiers T.

Ce moyen d'authentification consiste par exemple en un mot de passe Pₐᵤₜₕ. La clé privée K allouée au tiers T est générée dans l'applet puis certifiée par le serveur Spki, ce qui économise un certain nombre d'opérations en amont. Cette réalisation permet aussi de ne générer un certificat que si le tiers T se manifeste. Un autre avantage est que la clé privée K n'est jamais transmise, même sous forme chiffrée.

Le déroulement du procédé est alors le suivant, dans le cas déjà envisagé sur la figure 2 d'un service de courrier électronique recommandé avec accusé de réception signé.
- Etape 31:: U se connecte au serveur S1 grâce à un navigateur web, et choisit d'envoyer un message en clair avec accusé de réception signé, à un tiers T. Les éléments transmis au serveur sont le message M et l'adresse e-mail de T.
- Etape 32:: S1 s'adresse à Spki pour lui demander la génération d'un mot de passe comme moyen d'authentification de T, dont la durée de validité peut être de 7 jours.
- Etape 33:: Spki génère et stocke le mot de passe Pₐᵤₜₕ, qu'il transmet à S1.
- Etape 34:: S1 transmet à T, par exemple par e-mail, un avis de mise à disposition d'un message, ainsi que l'adresse de retrait.
- Etape 35:: T se connecte à S1 grâce à un navigateur, et récupère Pₐᵤₜₕ, l'accusé de réception à signer, ainsi que l'applet de signature. Il est informé dans la page qu'il doit s'authentifier auprès de Spki.
- Etape 36:: T s'authentifie auprès de Spki, en présentant le mot de passe Pₐᵤₜₕ. L'authentification peut aussi porter sur l'adresse e-mail ou une adresse IP de T si une telle adresse a été fournie à Spki et stockée en relation avec Pₐᵤₜₕ. L'authentification de T peut se faire dans le cadre d'un canal authentifié, consistant par exemple en une session du protocole SSL ("Secure Socket Layer", défini par la société Netscape Communications Corporation) établie avec le serveur Spki.
- Etape 37:: l'applet exécutée dans l'unité T génère la bi-clé K - Kpub.
- Etape 38:: l'applet exécutée dans l'unité T génère une requête de certificat de signature à l'aide de la clé publique Kpub générée à l'étape 37, et généralement aussi à l'aide de la clé privée K. La requête est transmise au serveur Spki dans la session SSL.
- Etape 39:: Spki génère un certificat temporaire de signature pour T et le communique d'une part à S1 et d'autre part à T dans la session SSL.
- Etapes 40 à 46:: identiques aux étapes 19 à 25 décrites en référence à la figure 2.

## Revendications

1. Procédé d'échange sécurisé entre une première unité de communication (U) et une seconde unité de communication (T) par l'intermédiaire d'un système de contrôle (S), dans lequel ladite seconde unité (T) exécute, au moyen d'au moins une clé privée (K) de la seconde unité (T), au moins une opération cryptographique en relation avec un message (M) issu de ladite première unité (U), **caractérisé en ce que**:
- la première unité (U) transmet au système de contrôle (S) la requête de communication avec la seconde unité (T), accompagnée d'au moins un identifiant de la seconde unité;
- le système de contrôle génère pour la seconde unité au moins une clé privée (K) et un certificat (C) incorporant une clé publique associée à la clé privée;
- le système de contrôle transmet une version chiffrée de la clé privée à la seconde unité, par un premier chemin de communication;
- le système de contrôle transmet une clé de déchiffrement à la seconde unité, par un second chemin de communication ;
- la seconde unité récupère la clé privée à partir de sa version chiffrée à l'aide de la clé de déchiffrement, et exécute au moins une opération cryptographique avec la clé privée, ladite clé privée (K) ainsi que le certificat (C) incorporant une clé publique associée à la clé privée (K) étant générés en réponse à la réception par ledit système de contrôle (S), depuis la première unité (U), de ladite requête de communication avec la seconde unité (T).

2. Procédé selon la revendication 1, dans lequel la clé privée (K) est chiffrée à l'aide d'un mot de passe (P) transmis à la seconde unité (T) par le second chemin de communication.

3. Procédé selon l'une quelconque des revendications 1 ou 2, dans lequel le système de contrôle (S) notifie la requête de communication à la seconde unité (T) après avoir obtenu le certificat (C), et dans lequel en réponse à la notification, la seconde unité établit une session de communication avec le système de contrôle par l'intermédiaire du premier chemin de communication pour se faire envoyer la version chiffrée de la clé privée et le certificat.

4. Procédé d'échange sécurisé entre une première unité de communication (U) et une seconde unité de communication (T) par l'intermédiaire d'un système de contrôle (S), dans lequel ladite seconde unité (T) exécute, au moyen d'au moins une clé privée (K) de la seconde unité (T), au moins une opération cryptographique en relation avec un message (M) issu de ladite première unité (U), **caractérisé en ce que** :
- la première unité (U) transmet au système de contrôle (S) la requête de communication avec la seconde unité (T), accompagnée d'au moins un identifiant de la seconde unité;
- le système de contrôle obtient une clé d'authentification (Pₐᵤₜₕ) pour la seconde unité et notifie la requête de communication à la seconde unité par un premier chemin de communication
- la seconde unité (T) récupère ladite clé d'authentification (Pₐᵤₜₕ) auprès du système de contrôle ;
- la seconde unité s'authentifie auprès du système de contrôle en présentant le mot de passe (Pₐᵤₜₕ), en établissant ainsi un canal de communication authentifié sur un second chemin de communication entre la seconde unité et le système de contrôle;
- la seconde unité génère un couple clé privée - clé publique;
- la seconde unité transmet au système de contrôle, sur le canal authentifié, une requête de certificat générée au moyen d'au moins la clé publique ;
- le système de contrôle génère et transmet à la seconde unité, sur le canal authentifié, le certificat incorporant la clé publique ;
- la seconde unité exécute au moins une opération cryptographique avec la clé privée (K), ladite clé privée (K) ainsi que le certificat (C) incorporant une clé publique associée à la clé privée (K) étant générés en réponse à la réception par ledit système de contrôle (S), depuis la première unité (U), d'une requête de communication avec la seconde unité (T).

5. Procédé selon l'une des revendications 1 à 4, dans lequel le système de contrôle (S) transmet à la seconde unité (T) une application en langage à code mobile, adaptée pour superviser les opérations effectuées par la seconde unité en relation avec la clé privée (K).

6. Procédé selon l'une des revendications 1 à 3 et 5, dans lequel l'application en langage à code mobile exécutée dans la seconde unité (T) va chercher la version chiffrée de la clé privée au système de contrôle (S), déchiffre la clé privée (K) à l'aide de la clé de déchiffrement (P), exécute ladite opération cryptographique, puis détruit la clé privée à la seconde unité et commande la destruction de la version chiffrée de la clé privée au système de contrôle.

7. Procédé selon l'une quelconque des revendications 1 à 6, dans lequel l'identifiant de la seconde unité (T) inclut une adresse de messagerie électronique et/ou un numéro de téléphone mobile.

8. Procédé selon l'une quelconque des revendications 1 à 7, dans lequel le système de contrôle (S) comprend un premier serveur (S1) communiquant avec la première unité (U) et, par le premier chemin de communication, avec la seconde unité (T), et un seconde serveur (Spki) communiquant avec la seconde unité par le second chemin de communication.

9. Procédé selon la revendication 8, dans lequel la requête de communication est reçue par le premier serveur (S1) qui sollicite le second serveur (Spki) pour qu'il obtienne le certificat (C), le second serveur retournant le certificat au premier serveur.

10. Procédé selon la revendication 8 ou 9, dans lequel le système de contrôle (S) comprend un troisième serveur (S3) par l'intermédiaire duquel le second serveur (Spki) communique avec la seconde unité (T).

11. Procédé selon l'une quelconque des revendications 1 à 10, dans lequel le second chemin de communication est sélectionné par la seconde unité (T).

12. Procédé selon l'une quelconque des revendications précédentes, dans lequel ladite opération cryptographique exécutée par la seconde unité (T) avec la clé privée (K) comprend le déchiffrement d'un message (M) issu de la première unité (U), et dans lequel après avoir obtenu le certificat (C), le système de contrôle (S) transmet la clé publique à la première unité, la première unité chiffrant le message à l'aide de ladite clé publique et transmettant le message chiffré à destination de la seconde unité.

13. Procédé selon l'une quelconque des revendications précédentes, dans lequel ladite opération cryptographique exécutée par la seconde unité (T) avec la clé privée (K) comprend la signature d'un accusé de réception d'un message (M) issu de la première unité (U).

14. Procédé selon la revendication 13, dans lequel le système de contrôle (S) reçoit ledit message (M) de la première unité (U) et l'accusé de réception signé par la seconde unité (T), et vérifie la signature de l'accusé de réception avant de faire suivre le message à la seconde unité.

15. Procédé selon l'une quelconque des revendications précédentes, dans lequel ladite opération cryptographique exécutée par la seconde unité (T) avec la clé privée (K) comprend une authentification vérifiable par la clé publique, une opération d'horodatage et/ou l'inclusion d'une preuve persistante de validité du certificat (C).

16. Système de contrôle (S) d'échanges sécurisés entre une première unité de communication (U) et une seconde unité de communication (T), ladite seconde unité (T) exécutant au moyen d'une clé privée (K) de la seconde unité (T) au moins une opération cryptographique en relation avec un message (M) issu de la première unité (U), **caractérisé en ce qu'**il comprend des moyens pour générer, en réponse à la réception, par ledit système de contrôle (S), depuis la première unité (U), d'une requête de communication avec la seconde unité (T), au moins un certificat (C) incorporant une clé publique associée à ladite clé privée (K) propre à la seconde unité, ledit système de contrôle (S) communiquant avec ladite seconde unité (T) par un premier et par un deuxième chemin de communication pour l'obtention dudit certificat (C) et des moyens pour commander l'exécution par la seconde unité (T) de ladite au moins une opération cryptographique au moyen de ladite clé privée.

17. Système selon la revendication 16, dans lequel les moyens pour commander l'exécution d'au moins une opération cryptographique par la seconde unité (T) comprennent des moyens de transmission à la seconde unité d'une application en langage à code mobile.

18. Système selon la revendication 16 ou 17, comprenant des moyens pour, en réponse à la réception de la requête de communication, générer pour la seconde unité (T) au moins une clé privée (K) et un certificat (C) incorporant une clé publique associée à ladite clé privée, des moyens pour transmettre une version chiffrée de la clé privée à la seconde unité, par un premier chemin de communication, et des moyens pour transmettre une clé de déchiffrement (P) à la seconde unité, par un second chemin de communication.

19. Système selon la revendication 16 ou 17, dans lequel lesdits moyens pour générer au moins un certificat (C) comprennent des moyens pour, en réponse à la réception de la requête de communication, obtenir une clé d'authentification pour la seconde unité (T) et notifier la requête de communication à la seconde unité par un premier chemin de communication, des moyens d'authentification de la seconde unité et d'établissement d'un canal de communication authentifié sur un second chemin de communication entre la seconde unité et le système de contrôle, des moyens de commande de la seconde unité pour qu'elle génère un couple clé privée - clé publique et émette, sur le canal authentifié, une requête de certificat générée au moyen d'au moins la clé publique, et des moyens pour générer et transmettre à la seconde unité, sur le canal authentifié, le certificat (C) incorporant la clé publique.

20. Système selon la revendication 18 ou 19, comprenant un premier serveur (S1) communiquant avec la première unité (U) et, par le premier chemin de communication, avec la seconde unité (T), et un second serveur (Spki) communiquant avec la seconde unité par le second chemin de communication.

21. Système selon la revendication 20, dans lequel le premier serveur (S1) comprend des moyens de réception de la requête de communication et des moyens pour solliciter le second serveur (Spki) pour qu'il obtienne le certificat (C), le second serveur retournant le certificat au premier serveur.

22. Système selon la revendication 20 ou 21, comprenant un troisième serveur (S3) par l'intermédiaire duquel le second serveur (Spki) communique avec la seconde unité (T).

23. Système selon l'une quelconque des revendications 16 à 22, dans lequel ladite opération cryptographique exécutée par la seconde unité (T) avec la clé privée (K) comprend le déchiffrement d'un message (M) issu de la première unité (U), le système de contrôle (S) comprenant des moyens pour transmettre la clé publique à la première unité après avoir obtenu le certificat (C) et des moyens pour relayer à la seconde unité un message chiffré par la première unité à l'aide de ladite clé publique.

24. Système selon l'une quelconque des revendications 16 à 23, dans lequel ladite opération cryptographique exécutée par la seconde unité (T) avec la clé privée (K) comprend la signature d'un accusé de réception d'un message (M) issu de la première unité (U).

25. Système selon la revendication 24, comprenant des moyens de réception dudit message de la première unité (U), des moyens de réception de l'accusé de réception signé par la seconde unité (T), et des moyens de vérification de la signature de l'accusé de réception avant de faire suivre le message (M) à la seconde unité.

26. Serveur (S1) de contrôle d'échanges sécurisés entre une première unité de communication (U) et une seconde unité de communication (T), ladite seconde unité (T) exécutant au moyen d'une clé privée (K) de la seconde unité (T) au moins une opération cryptographique en relation avec un message (M) issu de la première unité (U), **caractérisé en ce qu'**il comprend des moyens pour s'adresser à un serveur de certification (Spki) en réponse à la réception, depuis la première unité (U), d'une requête de communication avec la seconde unité (T), afin d'obtenir du serveur de certification (Spki) au moins un certificat (C) incorporant une clé publique associée à ladite clé privée (K) propre à la seconde unité, ledit serveur de contrôle d'échanges sécurisés (S1) communiquant avec ladite deuxième unité (T) par un premier chemin de communication et ledit serveur de certification (Spki) communiquant par un deuxième chemin de communication pour l'obtention dudit certificat (C), et des moyens pour commander l'exécution par la seconde unité (T) de ladite au moins une opération cryptographique au moyen de ladite clé privée.

27. Serveur selon la revendication 26, dans lequel les moyens pour commander l'exécution d'au moins une opération cryptographique par la seconde unité (T) comprennent des moyens de transmission à la seconde unité d'une application en langage à code mobile.

28. Serveur selon la revendication 26 ou 27, dans lequel le certificat (C) est obtenu avec une version chiffrée de la clé privée produite par le serveur de certification (Spki), le serveur de contrôle d'échanges sécurisés (S1) comprenant des moyens pour transmettre la version chiffrée de la clé privée à la seconde unité (T).

29. Serveur selon l'une quelconque des revendications 26 à 28, dans lequel ladite opération cryptographique exécutée par la seconde unité (T) avec la clé privée (K) comprend le déchiffrement d'un message (M) issu de la première unité (U), le serveur de contrôle d'échanges sécurisés (S1) comprenant des moyens pour transmettre la clé publique à la première unité après avoir obtenu le certificat (C) et des moyens pour relayer à la seconde unité un message chiffré par la première unité à l'aide de ladite clé publique.

30. Serveur selon l'une quelconque des revendications 26 à 29, dans lequel ladite opération cryptographique exécutée par la seconde unité (T) avec la clé privée (K) comprend la signature d'un accusé de réception d'un message (M) issu de la première unité (U).

31. Serveur selon la revendication 30, comprenant des moyens de réception dudit message de la première unité (U), des moyens de réception de l'accusé de réception signé par la seconde unité (T), et des moyens de vérification de la signature de l'accusé de réception avant de faire suivre le message (M) à la seconde unité.

## Claims

1. Method for secure interchanges between a first communication unit (U) and a second communication unit (T) via a control system (S), in which said second unit (T) uses at least one private key (K) of the second unit (T) to execute at least one cryptographic operation in relation to a message (M) obtained from said first unit (U), **characterized in that**:
- the first unit (U) transmits to the control system (S) the request for communication with the second unit (T), accompanied by at least one identifier of the second unit;
- the control system generates, for the second unit, at least one private key (K) and a certificate (C) incorporating a public key associated with the private key;
- the control system transmits an encrypted version of the private key to the second unit, via a first communication path;
- the control system transmits a decryption key to the second unit, via a second communication path;
- the second unit recovers the private key from its encrypted version using the decryption key, and executes at least one cryptographic operation with the private key, said private key (K) and the certificate (C) incorporating a public key associated with the private key (K) being generated in response to the reception by said control system (S), from the first unit (U), of said request for communication with the second unit (T).

2. Method according to Claim 1, in which the private key (K) is encrypted using a password (P) transmitted to the second unit (T) via the second communication path.

3. Method according to either of Claims 1 and 2, in which the control system (S) notifies the second unit (T) of the communication request after having obtained the certificate (C), and in which, in response to the notification, the second unit sets up a communication session with the control system via the first communication path in order to be sent the encrypted version of the private key and the certificate.

4. Method for secure interchanges between a first communication unit (U) and a second communication unit (T) via a control system (S), in which said second unit (T) uses at least one private key (K) of the second unit (T) to execute at least one cryptographic operation in relation to a message (M) obtained from said first unit (U), **characterized in that**:
- the first unit (U) transmits to the control system (S) the request for communication with the second unit (T), accompanied by at least one identifier of the second unit;
- the control system obtains an authentication key (Pₐᵤₜₕ) for the second unit and notifies the second unit of the communication request via a first communication path;
- the second unit (T) recovers said authentication key (Pₐᵤₜₕ) from the control system;
- the second unit is authenticated with the control system by submitting the password (Pₐᵤₜₕ), thus setting up an authenticated communication channel over a second communication path between the second unit and the control system;
- the second unit generates a private key-public key pair;
- the second unit transmits to the control system, over the authenticated channel, a certificate request generated by means of at least the public key;
- the control system generates and transmits to the second unit, over the authenticated channel, the certificate incorporating the public key;
- the second unit executes at least one cryptographic operation with the private key (K), said private key (K) and the certificate (C) incorporating a public key associated with the private key (K) being generated in response to the reception by said control system (S), from the first unit (U), of a request for communication with the second unit (T).

5. Method according to one of Claims 1 to 4, in which the control system (S) transmits to the second unit (T) an application in mobile code language, suitable for supervising the operations carried out by the second unit in relation to the private key (K).

6. Method according to one of Claims 1 to 3 and 5, in which the application in mobile code language executed in the second unit (T) looks for the encrypted version of the private key on the control system (S), decrypts the private key (K) using the decryption key (P), executes said cryptographic operation, then destroys the private key on the second unit and controls the destruction of the encrypted version of the private key on the control system.

7. Method according to any one of Claims 1 to 6, in which the identifier of the second unit (T) includes an electronic mail address and/or a mobile telephone number.

8. Method according to any one of Claims 1 to 7, in which the control system (S) comprises a first server (S1) communicating with the first unit (U) and, via the first communication path, with the second unit (T), and a second server (Spki) communicating with the second unit via the second communication path.

9. Method according to Claim 8, in which the communication request is received by the first server (S1) which invokes the second server (Spki) for it to obtain the certificate (C), the second server returning the certificate to the first server.

10. Method according to Claim 8 or 9, in which the control system (S) comprises a third server (S3) via which the second server (Spki) communicates with the second unit (T).

11. Method according to any one of Claims 1 to 10, in which the second communication path is selected by the second unit (T).

12. Method according to any one of the preceding claims, in which said cryptographic operation executed by the second unit (T) with the private key (K) comprises the decryption of a message (M) obtained from the first unit (U), and in which, after having obtained the certificate (C), the control system (S) transmits the public key to the first unit, the first unit encrypting the message using said public key and transmitting the encrypted message to the second unit.

13. Method according to any one of the preceding claims, in which said cryptographic operation executed by the second unit (T) with the private key (K) comprises the signing of an acknowledgement of a message (M) obtained from the first unit (U).

14. Method according to Claim 13, in which the control system (S) receives said message (M) from the first unit (U) and the acknowledgement signed by the second unit (T), and checks the signing of the acknowledgement before forwarding the message to the second unit.

15. Method according to any one of the preceding claims, in which said cryptographic operation executed by the second unit (T) with the private key (K) comprises an authentication that can be verified by the public key, a time-stamping operation and/or the inclusion of a persistent proof of validity of the certificate (C).

16. System (S) controlling secure interchanges between a first communication unit (U) and a second communication unit (T), said second unit (T) using a private key (K) of the second unit (T) to execute at least one cryptographic operation in relation to a message (M) obtained from the first unit (U), **characterized in that** it comprises means for generating, in response to the reception, by said control system (S), from the first unit (U), of a request for communication with the second unit (T), at least one certificate (C) incorporating a public key associated with said private key (K) specific to the second unit, said control system (S) communicating with said second unit (T) via a first and via a second communication path to obtain said certificate (C) and means for controlling the execution by the second unit (T) of said at least one cryptographic operation by means of said private key.

17. System according to Claim 16, in which the means for controlling the execution of at least one cryptographic operation by the second unit (T) comprise means of transmitting an application in mobile code language to the second unit.

18. System according to Claim 16 or 17, comprising means for, in response to the reception of the communication request, generating for the second unit (T) at least one private key (K) and a certificate (C) incorporating a public key associated with said private key, means for transmitting an encrypted version of the private key to the second unit, via a first communication path, and means for transmitting a decryption key (P) to the second unit, via a second communication path.

19. System according to Claim 16 or 17, in which said means for generating at least one certificate (C) comprise means for, in response to the reception of the communication request, obtaining an authentication key for the second unit (T) and notifying the second unit of the communication request via a first communication path, means of authenticating the second unit and setting up an authenticated communication channel over a second communication path between the second unit and the control system, means of controlling the second unit for it to generate a private key - public key pair and transmit, over the authenticated channel, a certificate request generated by means of at least the public key, and means for generating and transmitting to the second unit, over the authenticated channel, the certificate (C) incorporating the public key.

20. System according to Claim 18 or 19, comprising a first server (S1) communicating with the first unit (U) and, via the first communication path, with the second unit (T), and a second server (Spki) communicating with the second unit via the second communication path.

21. System according to Claim 20, in which the first server (S1) comprises means of receiving the communication request and means for invoking the second server (Spki) for it to obtain the certificate (C), the second server returning the certificate to the first server.

22. System according to Claim 20 or 21, comprising a third server (S3) via which the second server (Spki) communicates with the second unit (T).

23. System according to any one of Claims 16 to 22, in which said cryptographic operation executed by the second unit (T) with the private key (K) comprises the decryption of a message (M) obtained from the first unit (U), the control system (S) comprising means for transmitting the public key to the first unit after having obtained the certificate (C) and means for relaying to the second unit a message encrypted by the first unit using said public key.

24. System according to any one of Claims 16 to 23, in which said cryptographic operation executed by the second unit (T) with the private key (K) comprises the signing of an acknowledgement of a message (M) obtained from the first unit (U).

25. System according to Claim 24, comprising means of receiving said message from the first unit (U), means of receiving the acknowledgement signed by the second unit (T), and means of verifying the signing of the acknowledgement before forwarding the message (M) to the second unit.

26. Server (S1) for controlling secure interchanges between a first communication unit (U) and a second communication unit (T), said second unit (T) using a private key (K) of the second unit (T) to execute at least one cryptographic operation in relation to a message (M) obtained from the first unit (U), **characterized in that** it comprises means for contacting a certification server (Spki) in response to the reception, from the first unit (U), of a request for communication with the second unit (T), in order to obtain from the certification server (Spki) at least one certificate (C) incorporating a public key associated with said private key (K) specific to the second unit, said server controlling secure interchanges (S1) communicating with said second unit (T) via a first communication path and said certification server (Spki) communicating via a second communication path to obtain said certificate (C), and means for controlling the execution by the second unit (T) of said at least one cryptographic operation by means of said private key.

27. Server according to Claim 26, in which the means for controlling the execution of at least one cryptographic operation by the second unit (T) comprise means of transmitting an application in mobile code language to the second unit.

28. Server according to Claim 26 or 27, in which the certificate (C) is obtained with an encrypted version of the private key produced by the certification server (Spki), the server controlling secure interchanges (S1) comprising means for transmitting the encrypted version of the private key to the second unit (T).

29. Server according to any one of Claims 26 to 28, in which said cryptographic operation executed by the second unit (T) with the private key (K) comprises the decryption of a message (M) obtained from the first unit (U), the server controlling secure interchanges (S1) comprising means for transmitting the public key to the first unit after having obtained the certificate (C) and means for relaying to the second unit a message encrypted by the first unit using said public key.

30. Server according to any one of Claims 26 to 29, in which said cryptographic operation executed by the second unit (T) with the private key (K) comprises the signing of an acknowledgement of a message (M) obtained from the first unit (U).

31. Server according to Claim 30, comprising means of receiving said message from the first unit (U), and means of receiving the acknowledgement signed by the second unit (T), and means of verifying the signing of the acknowledgement before forwarding the message (M) to the second unit.

## Patentansprüche

1. Verfahren für den gesicherten Austausch zwischen einer ersten Kommunikationseinheit (U) und einer zweiten Kommunikationseinheit (T) mittels eines Kontrollsystems (S), bei dem die zweite Einheit (T) mit Hilfe mindestens eines privaten Schlüssels (K) der zweiten Einheit (T) mindestens eine kryptographische Operation in Verbindung mit einer Mitteilung (M) ausführt, die von der ersten Einheit (U) stammt, **dadurch gekennzeichnet, dass**:
- die erste Einheit (U) die Kommunikationsanforderung mit der zweiten Einheit (T) zusammen mit mindestens einer Kennung der zweiten Einheit an das Kontrollsystem (S) überträgt;
- das Kontrollsystem für die zweite Einheit mindestens einen privaten Schlüssel (K) und ein Zertifikat (C) erzeugt, in das ein dem privaten Schlüssel zugeordneter öffentlicher Schlüssel eingefügt ist;
- das Kontrollsystem über einen ersten Kommunikationspfad eine verschlüsselte Version des privaten Schlüssels an die zweite Einheit überträgt;
- das Kontrollsystem über einen zweiten Kommunikationspfad einen Entschlüsselungsschlüssel an die zweite Einheit überträgt;
- die zweite Einheit den privaten Schlüssel ausgehend von seiner verschlüsselten Version mit Hilfe des Entschlüsselungsschlüssels wiedergewinnt und mindestens eine kryptographische Operation mit dem privaten Schlüssel durchführt, wobei der private Schlüssel (K) sowie das Zertifikat (C), in das ein dem privaten Schlüssel (K) zugeordneter öffentlicher Schlüssel eingefügt ist, als Reaktion auf den Empfang durch das Kontrollsystem (S) der Kommunikationsanforderung mit der zweiten Einheit (T) ausgehend von der ersten Einheit (U) erzeugt werden.

2. Verfahren nach Anspruch 1, bei dem der private Schlüssel (K) mit Hilfe eines Passworts (P) verschlüsselt wird, das über den zweiten Kommunikationspfad an die zweite Einheit (T) übertragen wird.

3. Verfahren nach einem der Ansprüche 1 oder 2, bei dem das Kontrollsystem (S) die Kommunikationsanforderung der zweiten Einheit (T) mitteilt, nachdem es das Zertifikat (C) erlangt hat, und bei dem als Reaktion auf die Mitteilung die zweite Einheit über den ersten Kommunikationspfad eine Kommunikationssitzung mit dem Kontrollsystem aufbaut, um sich die verschlüsselte Version des privaten Schlüssels und das Zertifikat schicken zu lassen.

4. Verfahren für den gesicherten Austausch zwischen einer ersten Kommunikationseinheit (U) und einer zweiten Kommunikationseinheit (T) mittels eines Kontrollsystems (S), bei dem die zweite Einheit (T) mit Hilfe mindestens eines privaten Schlüssels (K) der zweiten Einheit (T) mindestens eine kryptographische Operation in Verbindung mit einer Mitteilung (M) ausführt, die von der ersten Einheit (U) stammt, **dadurch gekennzeichnet, dass**:
- die erste Einheit (U) die Kommunikationsanforderung mit der zweiten Einheit (T) zusammen mit mindestens einer Kennung der zweiten Einheit an das Kontrollsystem (S) überträgt;
- das Kontrollsystem einen Authentifizierungsschlüssel (Pₐᵤₜₕ) für die zweite Einheit erlangt und die Kommunikationsanforderung der zweiten Einheit über einen ersten Kommunikationspfad mitteilt;
- die zweite Einheit (T) den Authentifizierungsschlüssel (Pₐᵤₜₕ) beim Kontrollsystem abholt;
- die zweite Einheit sich bei dem Kontrollsystem authentifiziert, indem sie das Passwort (Pₐᵤₜₕ) präsentiert, wodurch sie einen authentifizierten Kommunikationskanal auf einem zweiten Kommunikationspfad zwischen der zweiten Einheit und dem Kontrollsystem aufbaut;
- die zweite Einheit ein Paar aus privatem Schlüssel und öffentlichem Schlüssel erzeugt;
- die zweite Einheit auf dem authentifizierten, Kanal eine Zertifikat-Anforderung an das Kontrollsystem überträgt, die mittels mindestens des öffentlichen Schlüssels erzeugt wird;
- das Kontrollsystem das den öffentlichen Schlüssel enthaltende Zertifikat erzeugt und auf dem authentifizierten Kanal an die zweite Einheit überträgt;
- die zweite Einheit mindestens eine kryptographische Operation mit dem privaten Schlüssel (K) ausführt, wobei der private Schlüssel (K) sowie das Zertifikat (C), das einen dem privaten Schlüssel (K) zugeordneten öffentlichen Schlüssel enthält, als Reaktion auf den Empfang durch das Kontrollsystem (S) der Kommunikationsanforderung mit der zweiten Einheit (T) ausgehend von der ersten Einheit (U) erzeugt werden.

5. Verfahren nach einem der Ansprüche 1 bis 4, bei dem das Kontrollsystem (S) an die zweite Einheit (T) eine Anwendung in einer Sprache mit mobilem Code überträgt, die angepasst ist, um die Operationen zu überwachen, die von der zweiten Einheit in Verbindung mit dem privaten Schlüssel (K) durchgeführt werden.

6. Verfahren nach einem der Ansprüche 1 bis 3 und 5, bei dem die Anwendung in einer Sprache mit mobilem Code, die in der zweiten Einheit (T) ausgeführt wird, die verschlüsselte Version des privaten Schlüssels beim Kontrollsystem (S) abholt, den privaten Schlüssel (K) mit Hilfe des Entschlüsselungsschlüssels (P) entschlüsselt, die kryptographische Operation ausführt, dann den privaten Schlüssel in der zweiten Einheit zerstört und dem Kontrollsystem die Zerstörung der verschlüsselten Version des privaten Schlüssels befiehlt.

7. Verfahren nach einem der Ansprüche 1 bis 6, bei dem die Kennung der zweiten Einheit (T) eine Mailboxadresse und/oder eine Mobiltelefonnummer enthält.

8. Verfahren nach einem der Ansprüche 1 bis 7, bei dem das Kontrollsystem (S) einen ersten Server (S1), der mit der ersten Einheit (U) und über den ersten Kommunikationspfad mit der zweiten Einheit (T) kommuniziert, und einen zweiten Server (Spki) aufweist, der mit der zweiten Einheit über den zweiten Kommunikationspfad kommuniziert.

9. Verfahren nach Anspruch 8, bei dem die Kommunikationsanforderung vom ersten Server (S1) empfangen wird, der den zweiten Server (Spki) beansprucht, damit er das Zertifikat (C) erlangt, wobei der zweite Server das Zertifikat an den ersten Server zurückschickt.

10. Verfahren nach Anspruch 8 oder 9, bei dem das Kontrollsystem (S) einen dritten Server (S3) aufweist, über den der zweite Server (Spki) mit der zweiten Einheit (T) kommuniziert.

11. Verfahren nach einem der Ansprüche 1 bis 10, bei dem der zweite Kommunikationspfad von der zweiten Einheit (T) ausgewählt wird.

12. Verfahren nach einem der vorhergehenden Ansprüche, bei dem die kryptographische Operation, die von der zweiten Einheit (T) mit dem privaten Schlüssel (K) ausgeführt wird, die Entschlüsselung einer Mitteilung (M) enthält, die von der ersten Einheit (U) stammt, und bei dem nach Erlangen des Zertifikats (C) das Kontrollsystem (S) den öffentlichen Schlüssel an die erste Einheit überträgt, wobei die erste Einheit die Mitteilung mit Hilfe des öffentlichen Schlüssels verschlüsselt und die verschlüsselte Mitteilung an die zweite Einheit überträgt.

13. Verfahren nach einem der vorhergehenden Ansprüche, bei dem die kryptographische Operation, die von der zweiten Einheit (T) mit dem privaten Schlüssel (K) ausgeführt wird, die Signatur einer Empfangsbestätigung einer Mitteilung (M) aufweist, die von der ersten Einheit (U) stammt.

14. Verfahren nach Anspruch 13, bei dem das Kontrollsystem (S) die Mitteilung (M) von der ersten Einheit (U) und die von der zweiten Einheit (T) signierte Empfangsbestätigung empfängt und die Signatur der Empfangsbestätigung prüft, ehe es die Mitteilung an die zweite Einheit weiterleitet.

15. Verfahren nach einem der vorhergehenden Ansprüche, bei dem die kryptographische Operation, die von der zweiten Einheit (T) mit dem privaten Schlüssel (K) ausgeführt wird, eine Authentifizierung, die vom öffentlichen Schlüssel überprüft werden kann, eine Operation der Zeit- und Datumsangabe und/oder das Einfügen eines anhaltenden Beweises der Gültigkeit des Zertifikats (C) aufweist.

16. Kontrollsystem (S) von gesicherten Austauschvorgängen zwischen einer ersten Kommunikationseinheit (U) und einer zweiten Kommunikationseinheit (T), wobei die zweite Einheit (T) mittels eines privaten Schlüssels (K) der zweiten Einheit (T) mindestens eine kryptographische Operation in Verbindung mit einer Mitteilung (M) ausführt, die von der ersten Einheit (U) stammt, **dadurch gekennzeichnet, dass** es Mittel, um als Reaktion auf den Empfang einer Kommunikationsanforderung mit der zweiten Einheit (T) durch das Kontrollsystem (S) von der ersten Einheit (U) mindestens ein Zertifikat (C) zu erzeugen, das einen dem der zweiten Einheit (T) eigenen privaten Schlüssel (K) zugeordneten öffentlichen Schlüssel enthält, wobei das Kontrollsystem (S) mit der zweiten Einheit (T) über einen ersten und über einen zweiten Kommunikationspfad für das Erlangen des Zertifikats (C) kommuniziert, und Mittel aufweist, um die Ausführung der mindestens einen kryptographischen Operation durch die zweite Einheit (T) mit Hilfe des privaten Schlüssels zu befehlen.

17. System nach Anspruch 16, bei dem die Mittel zum Befehlen der Ausführung mindestens einer kryptographischen Operation durch die zweite Einheit (T) Mittel zur Übertragung einer Anwendung in einer Sprache mit mobilem Code an die zweite Einheit enthalten.

18. System nach Anspruch 16 oder 17, das Mittel, um als Reaktion auf den Empfang der Kommunikationsanforderung für die zweite Einheit (T) mindestens einen privaten Schlüssel (K) und ein Zertifikat (C) zu erzeugen, das einen dem privaten Schlüssel zugeordneten öffentlichen Schlüssel enthält, Mittel, um über einen ersten Kommunikationspfad eine verschlüsselte Version des privaten Schlüssels an die zweite Einheit zu übertragen, und Mittel aufweist, um über einen zweiten Kommunikationspfad einen Entschlüsselungsschlüssel (P) an die zweite Einheit zu übertragen.

19. System nach Anspruch 16 oder 17, bei dem die Mittel zur Erzeugung mindestens eines Zertifikats (C) Mittel, um als Reaktion auf den Empfang der Kommunikationsanforderung einen Authentifizierungsschlüssel für die zweite Einheit (T) zu erlangen und die Kommunikationsanforderung der zweiten Einheit über einen ersten Kommunikationspfad mitzuteilen, Mittel zur Authentifizierung der zweiten Einheit und für den Aufbau eines authentifizierten Kommunikationskanals auf einem zweiten Kommunikationspfad zwischen der zweiten Einheit und dem Kontrollsystem, Mittel zur Steuerung der zweiten Einheit, damit sie ein Paar aus privatem Schlüssel und öffentlichem Schlüssel erzeugt und auf dem authentifizierten Kanal eine Zertifikat-Anforderung sendet, die mittels mindestens des öffentlichen Schlüssels erzeugt wird, und Mittel aufweist, um das den öffentlichen Schlüssel enthaltende Zertifikat (C) zu erzeugen und an die zweite Einheit auf dem authentifizierten Kanal zu übertragen.

20. System nach Anspruch 18 oder 19, das einen ersten Server (S1), der mit der ersten Einheit (U) und über den ersten Kommunikationspfad mit der zweiten Einheit (T) kommuniziert, und einen zweiten Server (Spki) aufweist, der mit der zweiten Einheit über den zweiten Kommunikationspfad kommuniziert.

21. System nach Anspruch 20, bei dem der erste Server (S1) Mittel für den Empfang der Kommunikationsanforderung und Mittel aufweist, um den zweiten Server (Spki) zu beanspruchen, damit er das Zertifikat (C) erlangt, wobei der zweite Server das Zertifikat an den ersten Server zurückschickt.

22. System nach Anspruch 20 oder 21, das einen dritten Server (S3) aufweist, über den der zweite Server (Spki) mit der zweiten Einheit (T) kommuniziert.

23. System nach einem der Ansprüche 16 bis 22, bei dem die kryptographische Operation, die von der zweiten Einheit (T) mit dem privaten Schlüssel (K) ausgeführt wird, die Entschlüsselung einer Mitteilung (M) aufweist, die von der ersten Einheit (U) stammt, wobei das Kontrollsystem (S) Mittel, um den öffentlichen Schlüssel an die erste Einheit zu übertragen, nachdem das Zertifikat (C) erlangt wurde, und Mittel aufweist, um an die zweite Einheit eine Mitteilung zu übertragen, die von der ersten Einheit mit Hilfe des öffentlichen Schlüssels verschlüsselt wurde.

24. System nach einem der Ansprüche 16 bis 23, bei dem die kryptographische Operation, die von der zweiten Einheit (T) mit dem privaten Schlüssel (K) ausgeführt wird, die Signatur einer Empfangsbestätigung einer Mitteilung (M) aufweist, die von der ersten Einheit (U) stammt.

25. System nach Anspruch 24, das Mittel für den Empfang der Mitteilung von der ersten Einheit (U), Mittel für den Empfang der von der zweiten Einheit (T) signierten Empfangsbestätigung, und Mittel zur Prüfung der Signatur der Empfangsbestätigung aufweist, ehe die Mitteilung (M) an die zweite Einheit weitergeleitet wird.

26. Server (S1) zur Kontrolle von gesicherten Austauschvorgängen zwischen einer ersten Kommunikationseinheit (U) und einer zweiten Kommunikationseinheit (T), wobei die zweite Einheit (T) mittels eines privaten Schlüssels (K) der zweiten Einheit (T) mindestens eine kryptographische Operation in Verbindung mit einer Mitteilung (M) ausführt, die von der ersten Einheit (U) stammt, **dadurch gekennzeichnet, dass** er Mittel, um sich als Reaktion auf den Empfang von der ersten Einheit (U) einer Kommunikationsanforderung mit der zweiten Einheit (T) an einen Zertifikations-Server (Spki) zu wenden, um vom Zertifikations-Server (Spki) mindestens ein Zertifikat (C) zu erlangen, das einen dem der zweiten Einheit eigenen privaten Schlüssel (K) zugeordneten öffentlichen Schlüssel enthält, wobei der Server zur Kontrolle von gesicherten Austauschvorgängen (S1) mit der zweiten Einheit (T) über einen ersten Kommunikationspfad kommuniziert, und der Zertifikations-Server (Spki) über einen zweiten Kommunikationspfad für das Erlangen des Zertifikats (C) kommuniziert, und Mittel aufweist, um die Ausführung der mindestens einen kryptographischen Operation mittels des privaten Schlüssels durch die zweite Einheit (T) zu steuern.

27. Server nach Anspruch 26, bei dem die Mittel zum Befehlen der Ausführung mindestens einer kryptographischen Operation durch die zweite Einheit (T) Mittel für die Übertragung einer Anwendung in einer Sprache mit mobilem Code an die zweite Einheit aufweisen.

28. Server nach Anspruch 26 oder 27, bei dem das Zertifikat (C) mit einer verschlüsselten Version des privaten Schlüssels erlangt wird, die von dem Zertifikations-Server (Spki) erzeugt wird, wobei der Server zur Kontrolle von gesicherten Austauschvorgängen (S1) Mittel aufweist, um die verschlüsselte Version des privaten Schlüssels an die zweite Einheit (T) zu übertragen.

29. Server nach einem der Ansprüche 26 bis 28, bei dem die kryptographische Operation, die von der zweiten Einheit (T) mit dem privaten Schlüssel (K) ausgeführt wird, die Entschlüsselung einer Mitteilung (M) aufweist, die von der ersten Einheit (U) stammt, wobei der Server zur Kontrolle von gesicherten Austauschvorgängen (S1) Mittel, um den öffentlichen Schlüssel an die erste Einheit zu übertragen, nachdem das Zertifikat (C) erlangt wurde, und Mittel aufweist, um an die zweite Einheit eine Mitteilung zu übertragen, die von der ersten Einheit mit Hilfe des öffentlichen Schlüssels verschlüsselt wurde.

30. Server nach einem der Ansprüche 26 bis 29, bei dem die kryptographische Operation, die von der zweiten Einheit (T) mit dem privaten Schlüssel (K) ausgeführt wird, die Signatur einer Empfangsbestätigung einer Mitteilung (M) aufweist, die von der ersten Einheit (U) stammt.

31. Server nach Anspruch 30, der Mittel für den Empfang der Mitteilung von der ersten Einheit (U), Mittel für den Empfang der von der zweiten Einheit (T) signierten Empfangsbestätigung, und Mittel zur Prüfung der Signatur der Empfangsbestätigung aufweist, ehe die Mitteilung (M) an die zweite Einheit weitergeleitet wird.
